# EUROPEAN PATENT APPLICATION

(11) **EP 3 037 385 A1**
(43) Date of publication of application: **29.06.2016**
(21) Application number: 14837992.8
(22) Date of filing: 21.03.2014
(51) Int. Cl.: C01B 39/04

(54) **BETA MOLECULAR SIEVE HAVING MULTI-LEVEL CHANNEL STRUCTURE, AND PREPARATION METHOD THEREOF**

(30) Priority: 20.08.2013 CN 201310369527
(71) Applicant: Dalian Institute Of Chemical Physics, Chinese Academy of Sciences, Liaoning 116023 (CN)
(72) Inventor: YUAN, Yangyang, Dalian Liaoning 116023 (CN); TIAN, Peng, Dalian Liaoning 116023 (CN); LIU, Zhongmin, Dalian Liaoning 116023 (CN); YANG, Miao, Dalian Liaoning 116023 (CN); WANG, Linying, Dalian Liaoning 116023 (CN); YANG, Yue, Dalian Liaoning 116023 (CN)
(74) Representative: Hoffmann Eitle
(86) International application number: PCT/CN2014/073894
(87) International publication number: WO 2015/024382

(57) **Abstract**

Provided is a Beta molecular sieve having multi-level channels and synthesis method thereof The molecular sieve has a two-level mesoporous structure and uses polyquaternium-6, polyquaternium-7, polyquaternium-22, or polyquaternium-39 as a guiding agent for both micropores and mesopores during the process of synthesis. The present invention uses cheap raw materials and a simple synthesis method, and has broad industrial application prospect.

## Description

### TECHNICAL FIELD

This invention relates to a synthesis method of a Beta molecular sieve.

### BACKGROUND ART

Beta molecular sieve is the only zeolite having a three-dimensional interconnected pore system composed of 12-memberbed rings, its unique channel structure and acidity enable the Beta molecular sieve to possess very high catalytic activity for hydrocracking and hydroisomerization, adsorption capacity for linear alkanes, and antipoisoning capacity against sulfur and nitrogen. It may be used for preparing catalysts in petrochemical industry, such as those for preparation of isopropylbenzene by hydrocarbylation of benzene and propylene, preparation of diisopropylbenzene by disproportionation of isopropylbenzene, isopropylation of toluene, alkylation of aromatic hydrocarbon, transalkylation of diisopropylbenzene, etherification of propylene, aromatization of methanol, etherification of propylene oxide and ethanol, methylation of phenol, methylation of aniline, transalkylation of isopropylbenzene and toluene, and disproportionation and transalkylation of toluene. The use of a Beta molecular sieve in combination with USY will increase the octane number of gasoline. In the aspect of fine chemical industry, the Beta molecular sieve has very good activity and selectivity in dehydration and deamination.

However, in practical application, due to its relatively narrow channel structure, the diffusion of bulky molecules such as aromatic hydrocarbons in Beta molecular sieve will be restricted, which is prone to cause carbon build-up and thus severely restricts the use of the Beta molecular sieve in reactions of bulky molecules.

The discovery of multi-level channel molecular sieves having microporous and mesoporous composite structures provides new trend and possibility for solving the restriction of substance transfer and diffusion in micropores. Fengshou Xiao et al. synthesized Beta molecular sieve having multi-level channels by using tetraethylammonium hydroxide (TEAOH) as a micropore template agent, a cationic polymer as a mesopore template agent (Angew. Chem. 2006, 118, 3162-3165). D. P. Serrano obtained a Beta molecular sieve of multi-level channels by first pre-crystallizing a prepared gel at a certain temperature for a certain time, after cooling to room temperature, adding a silane coupling agent for interacting with seed crystals, and finally performing crystallization (Microporous and Mesoporous Materials 115 (2008) 504-513). The common feature of the above methods is the need of the expensive microporous template agent TEAOH to be used in the process of synthesis. Baoyu Liu et al. synthesized a Beta molecular sieve having multi-level channels by using a hexammonio quaternary ammonium salt surfactant as a template agent. Chinese patent application CN102826564A discloses a preparation method of a Beta zeolite molecular sieve having multi-level porous structures, wherein ethyl orthosilicate is used as a silicon source, sodium metaaluminate is used as an aluminium source, and a hexammonio cationic quaternary ammonium salt surfactant is used as a template agent. Although TEAOH is not used, other raw materials have high price and are not readily available, which is disadvantageous for large-scale industrial production.

### SUMMARY OF INVENTION

An object of the invention is to provide a Beta molecular sieve, characterized in that a substance containing the following structural unit is present in microporous and mesoporous channels of the molecular sieve: 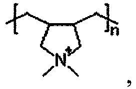 wherein n is a positive integer; said Beta molecular sieve, after being baked to remove the substance containing the structural unit 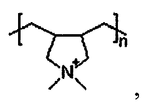 contains level I mesopores having a pore size of 2-4.8 nm and level II mesopores having a pore size of 4.9-13nm; preferably, the pore size of the level I mesopores is 2-4nm and the pore size of the level II mesopores is 5-10nm; further preferably, the pore size of the level I mesopores is 3-4nm and the pore size of the level II mesopores is 7-10nm. Herein, the pore volume ratio of the level I mesopores to the level II mesopores is 1:1-20. According to the requirement of the reaction, this pore volume ratio may be regulated by changing synthesis conditions, to obtain a Beta molecular sieve having a pore volume ratio of the level I mesopores to the level II mesopores of 1:1-10, or a Beta molecular sieve having a pore volume ratio of the level I mesopores to the level II mesopores of 1:11-20, or a Beta molecular sieve having a pore volume ratio of the level I mesopores to the level II mesopores of 1:2-7.

In a preferred embodiment, the total pore volume of said level I mesopores and said level II mesopores is not less than 0.5 cm³/g.

Another object of the invention is to provide a synthesis method of the above Beta molecular sieve having multi-level channel structures, characterized in that an initial gel mixture produced from a silicon source, an aluminium source, polyquaternium P, water, and a base source is crystallized under a hydrothermal condition at 120-179°C to prepare a Beta molecular sieve; wherein, said polyquaternium P is used as a structure guiding agent for both micropores and mesopores.

In a preferred embodiment, said polyquaternium P is selected from any one or more of polyquaternium-6, polyquaternium-7, polyquaternium-22, and polyquaternium-39.

In a preferred embodiment, said aluminium source is selected from an organic aluminium source and/or an inorganic aluminium source; said silicon source is selected from an organic silicon source and/or an inorganic silicon source; and said base source is selected from an organic base and/or an inorganic base.

In a preferred embodiment, said organic aluminium source is aluminum isopropoxide.

In a preferred embodiment, said inorganic aluminium source is selected from any one or more of aluminum oxide, aluminium hydroxide, aluminium chloride, aluminium sulfate, aluminum nitrate, and sodium aluminate.

In a preferred embodiment, said organic silicon source is selected from methyl orthosilicate and/or ethyl orthosilicate.

In a preferred embodiment, said inorganic silicon source is selected from any one or more of silica sol, silica gel, fumed silica, and water glass.

In a preferred embodiment, said organic base is selected from organic amines and/or alkali metal salts of alcohols.

In a preferred embodiment, said inorganic base is selected from any one or more of hydroxides, oxides, and carbonates of alkali metals or alkaline earth metals.

In a preferred embodiment, said base source is sodium hydroxide and/or potassium hydroxide.

In a preferred embodiment, the specific steps for synthesis comprise the steps of:
a) mixing a silicon source, an aluminium source, sodium hydroxide and/or potassium hydroxide, polyquaternium P, and water to form an initial gel mixture having the following proportions:
   the molar ratio of Al₂O₃:SiO₂ = 0.005-0.5
   the molar ratio of Na₂O and/or K₂O:SiO₂ = 0.10-0.5
   the molar ratio of H₂O:SiO₂ = 7-100
   the mass ratio of P:SiO₂ = 0.1-3;
b) charging the initial gel mixture obtained in said step a) to a stainless reaction kettle, enclosing, and then heating to 120-179°C and crystallizing for 12 hours or more;
c) after the crystallization is complete, separating and drying solid products to obtain the Beta molecular sieve.

In a preferred embodiment, said polyquaternium P in step a) is selected from any one or more of polyquaternium-6, polyquaternium-7, polyquaternium-22, and polyquaternium-39.

In a preferred embodiment, said polyquaternium P in step a) is selected from polyquaternium-6 and/or polyquaternium-22.

In a preferred embodiment, the mass ratio of polyquaternium P to SiO₂ (P:SiO₂) in said step a) is preferably 0.1-1.5, and further preferably, the mass ratio of polyquaternium P to SiO₂ (P:SiO₂) is 0.1-0.8.

In a preferred embodiment, the aluminium source in said step a) is any one of aluminium isopropoxide, aluminium oxide, aluminium hydroxide, aluminium chloride, aluminium sulfate, aluminium nitrate, and sodium aluminate or a mixture thereof; said silicon source is any one of silica sol, silica gel, methyl orthosilicate, ethyl orthosilicate, fumed silica, and water glass or a mixture thereof

In a preferred embodiment, the crystallization temperature is preferably 130-179°C and the crystallization time is preferably 12-216 hours in said step b).

In a preferred embodiment, the crystallization mode in said step b) may be static crystallization and may also be rotational crystallization.

In a preferred embodiment, after drying in said step c), a Beta molecular sieve having multi-level channel structure, which contains level I mesopores having a pore size of 2-4.8 nm and level II mesopores having a pore size of 4.9-13 nm, is obtained upon baking.

According to general knowledge in the art, a Beta molecular sieve has three 12-membered ring channels crossing with each other, the pore size of micropores is in a range of 0.6-0.7 nm, and the ratio of silicon to aluminium is 20-100.

According to general knowledge in the art, the structure guiding agent, also referred to as template agent, has a function of providing a template for the formation of molecular sieves or materials in the synthesis of molecular sieves or materials. At present, the most common molecular sieve template agents are organic amine compounds and compounds containing quaternary ammonium ions.

The person skilled in the art may arbitrarily adjust the ratio of silicon to aluminium of the molecular sieve between 20-100, by adjusting proportions of raw materials in the initial gel, according to the technical solution provided in the invention in combination with general knowledge in the art.

The polyquaternium P in this invention is a polymer with a polymerization degree of 10-100000. Said polymerization degree means an average polymerization degree, i.e., the average value of the number of repeating units contained in the macromolecular chain of the polymer.

Herein, said polyquaternium-6 is a copolymer of dimethyl diallyl ammonium chloride, with a molecular formula of (C₈H₁₆ClN)ₙ, wherein n is a positive integer; the chemical structural formula is:

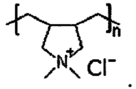

Said polyquaternium-7 is a dimethyl diallyl ammonium chloride-acrylamide copolymer with a molecular formula of (C₈H₁₆CN)ₙ•(C₃H₅NO)ₘ, wherein m and n are positive integers; the chemical structural formula is:

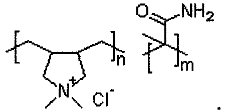

Said polyquaternium-10 is also referred to as JR-400 or 2-hydroxy-3-(trimethylammonio)propoxy polyethylene oxide cellulose ether chloride; the chemical structural formula is: 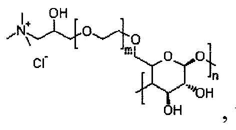 where m and n are positive integers.

Said polyquaternium-11 is a diethyl sulfate complex of a polymer of 2-(dimethylamino)ethyl 2-methyl-2-acrylate and 1-vinyl-2-pyrrolidone, with a molecular formula of (C₆H₉NO)ₓ•(C₁₀H₂₀NO₂•C₂H₅O₄S)_{y}, wherein x and y are all positive integers; the chemical structural formula is:

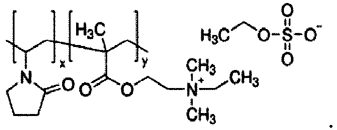

Said polyquaternium-22 is a copolymer of dimethyl diallyl ammonium chloride-acrylic acid, with a molecular formula of (C₈H₁₆CLN)n•(C₃H₅NO)ₘ; m and n are positive integers; the chemical structural formula is:

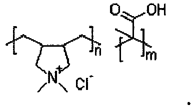

Said polyquaternium-32 is a copolymer of N,N,N-trimethyl-2-(2-methyl-1-oxo-2-propenyloxy)ethyl ammonium chloride-acrylamide with a molecular formula of (C₉H₁₈ClNO₂)ₙ·(C₃H₅NO)ₘ, m and n are positive integers; the chemical structural formula is:

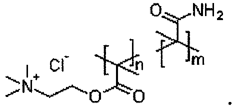

Said polyquaternium-37 is a homopolymer of N,N,N-trimethyl-2-[(2-methyl-1-oxo-2-propenyl)oxy]ethylamine hydrochloride; the molecular formula is (C₉H₁₈CNO₂)ₙ, n is a positive integer; the chemical structural formula is:

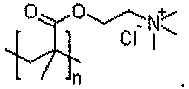

Said polyquaternium-39 is a copolymer of dimethyl diallyl ammonium chloride-acrylamide-acrylic acid; the molecular formula is (C₃HO₂)ₚ•(C₈H₁₆ClN)ₙ•(C₃H₅NO)ₘ; p, m, n are all positive integers; the chemical structural formula is:

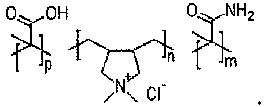

Said polyquaternium-44 is a copolymer of N-vinylpyrrolidone and quaternized vinylimidazole; the molecular formula is (C₆H₉N2•C₆H₉NO•CH₃O₄S)ₙ, n is a positive integer; the chemical structural formula is:

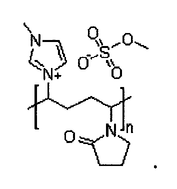

Compared to the prior art, the invention has the following advantages and beneficial effects:
(1) The invention uses a high-molecular polymer as a template agent. This raw material is inexpensive and easily available, without needing expensive TEAOH. The production cost of Beta molecular sieves is at least reduced by 90% and the foundation for large-scale industrial application is established.
(2) The Beta molecular sieve prepared in the invention has micropores and mesopores simultaneously, avoiding defects of a single channel, and has broad prospect for application in terms of macromolecule adsorption and catalysis.

### BRIEF DESCRIPTION OF THE DRAWING

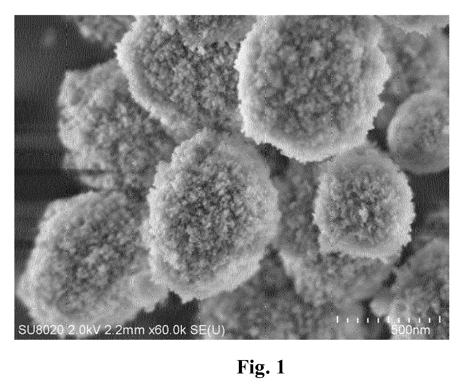

Fig. 1 is a scanning electron microscope image of sample 1.

### DESCRIPTION OF EMBODIMENTS

The present invention will be described in details below by Examples, but the invention is not limited to these Examples.

Raw material reagents used in Examples are all commercially available, and are directly used without any special treatment.

Polyquaternium-6 used was purchased from Zhejiang Xinhaitian Biotechnology Co., Ltd.; Polyquaternium-7 and polyquaternium-10 used were purchased from Guangzhou Feirui Chemical Co., Ltd.; Polyquaternium-11 was purchased from Shandong Hongyuan Chemical Co., Ltd.; Polyquaternium-22 was purchased from Haining Huangshan Chemical Co., Ltd.; Polyquaternium-32 was purchased from Jiangsu Feixiang Chemical Co., Ltd.; Polyquaternium-37 was purchased from Guangzhou Huicong Trade Co., Ltd.; Polyquaternium-39 was purchased from Guangzhou Shiming Chemical Co., Ltd.; Polyquaternium-44 was purchased from Xiamen Jialilai Chemical Co., Ltd.

### Example 1: Preparation of samples 1-40

An aluminium source was first added to deionized water, followed by uniform stirring. Sodium hydroxide and/or potassium hydroxide were further added thereto, and a silicon source was added after uniformly mixing, stirring was continued at room temperature until a uniform silicon-aluminium gel was formed, and finally polyquaternium P was added, followed by uniform stirring to obtain an initial gel. The initial gel was transferred to a stainless reaction kettle with a polytetrafluoroethylene lining and was directly placed in an oven for static crystallization or placed in a rotary oven for rotational crystallization. The resultant solid product was separated by centrifugation, washed with deionized water to neutral pH, dried in air at 110°C, and finally baked in a muffle furnace at 550°C for 8h to obtain a Beta molecular sieve having multi-level porous structure. For the prepared samples 1-40, the type and proportion of raw materials in the initial gel, the crystallization mode, the crystallization temperature, the crystallization time, and the yield of resultant products were shown in Table 1 respectively.

The yield was calculated as follows: The weight of the molecular sieve product upon baked ÷ the total weight of dry basis in the initial gel × 100%, wherein the dry basis in the initial gel was silicon oxide, aluminium oxide, sodium oxide and/or potassium oxide.

**Table 1 Formulations and crystallization conditions for molecular sieve synthesis**

| Sample No. | Raw materials and proportions in initial gel | | Crystallization mode | Crystallization temperature /°C | Crystallization time /hour | Yield /% |
|---|---|---|---|---|---|---|
| | Type and molar ratio of silicon source, aluminium source, water, and base | Type of polyquaternium P and mass ratio to SiO₂ (P/SiO₂) | | | | |
| 1 | 0.05Al₂O₃^{I}:1SiO₂^{a} :0.10Na₂O:7 H₂O | Polyquaternium-6, 0.1 | Rotational | 180 | 216 | 85.9 |
| 2 | 0.03Al₂O₃^{II}:1SiO₂^{e} :0.20Na₂O:10H₂O | Polyquaternium-7, 0.4 | Static | 190 | 144 | 86.2 |
| 3 | 0.005Al₂O₃^{III}:1SiO₂^{a} : 0.10Na₂O:10H₂O | Polyquaternium-10, 0.1 | Static | 180 | 96 | 87.5 |
| 4 | 0.005A1₂O₃^{III}:1SiO₂^{f} : 0.28Na₂O:10H₂O | Polyquaternium-22, 3.0 | Static | 200 | 120 | 90.3 |
| 5 | 0.01Al₂O₃¹:1SiO₂^{b}:0.35Na₂O:30H₂O | Polyquaternium-32, 0.8 | Static | 220 | 12 | 93.2 |
| 6 | 0.20Al₂O₃^{VI}:1SiO₂^{f}:0.40Na₂O:70H₂O | Polyquaternium-37, 1.5 | Rotational | 210 | 72 | 89.6 |
| 7 | 0.50Al₂O₃^{VII}:1SiO₂O^{c} 0.50Na₂O:100H₂O | Polyquaternium-39, 1.5 | Static | 180 | 120 | 88.7 |
| 8 | 0.5Al₂O₃^{v}:1SiO₂^{c} :0.10Na₂O:10k₂O OK20 20H₂O | Polyquaternium-44, 0.2 | Static | 200 | 48 | 92.1 |
| | | Polyquaternium-32, 0.2 | | | | |
| 9 | 0.40Al₂O₃^{IV}:1SiO₂^{d}:0.10Na₂O: 0.10K₂O:20H₂O | Polyquaternium-6, 0.2 | Rotational | 220 | 12 | 89.2 |
| | | Polyquaternium-7, 0.2 | | | | |
| | | Polyquaternium-22 0.2 | | | | |
| | | Polyquaternium-39, 0.2 | | | | |
| | | Polyquaternium-10 0.4 | | | | |
| 10 | 0.03Al₂O₃^{II}:1SiO₂^{d} :0.50Na₂O:100H₂O | Po\|yquaternium⁻³⁷, | Rotational | 185 | 216 | 90.6 |
| | | Polyquaternium-44, 0.2 | | | | |
| 11 | 0.005Al₂O₃^{I}:1SiO₂^{b} :0.10Na₂O:60H₂O | Polyquaternium-6, 0.1 | Rotational | 120 | 216 | 76.8 |
| 12 | 0.50Al₂O₃^{II}:1SiO₂^{b} :0.29Na₂O:7H₂O | Polyquaternium-7, 0.4 | Static | 130 | 144 | 78.3 |
| 13 | 0.075Al₂O₃^{I}:1S1O₂^{e} :0.29Na₂O:60H₂O | Polyquaternium-10, 0.8 | Static | 130 | 216 | 80.6 |
| 14 | 0.13Al₂O^{v}:1SiO₂^{b} :0.29K₂O:100H₂O | Polyquaternium-22 3.0 | Static | 145 | 120 | 81.4 |
| 15 | 0.040Al₂O₃^{III}:1SiO₂^{c}: 0.35Na₂O:30H₂O | Polyquaternium-7, 0.4 | Static | 150 | 48 | 80.7 |
| | | Polyquaternium-22, 0.4 | | | | |
| 16 | 0.25Al₂O₃^{v}:1SiO₂^{f} :0.35Na₂O:30H₂O | Polyquaternium-37, 3.0 | Rotational | 160 | 72 | 85.4 |
| 17 | 0.02Al₂O₃^{VI}:1SiO₂^{f} :0.45Na₂O:50H₂O | Polyquaternium-39, 1.5 | Static | 160 | 120 | 87.8 |
| 18 | 0.16Al₂O₃^{v}:1SiO₂^{f}:0.38Na₂O:70H₂O | Polyquaternium-44 1.5 | Static | 165 | 48 | 83.4 |
| | | Polyquaternium-6, 0.2 | | | | |
| 19 | 0.05Al₂O₃^{IV}:]SiO₂^{a}: 0.25Na₂O:0.25K₂O: 80H₂O | Polyquaternium-7, 0.2 | Rotational | 179 | 12 | 90.1 |
| | | Polyquaternium-22 0.2 | | | | |
| | | Polyquaternium-39, 0.2 | | | | |
| | | Polyquaternium-10, 0.4 | | | | |
| 20 | 0.02Al₂O₃^{IV} :1SiO₂^{f} :0.50Na₂O:30H₂O | Polyquaternium-37, | Static | 175 | 24 | 88.2 |
| | | Polyquaternium-44, 0.2 | | | | |
| 21 | 0.005Al₂O₃^{VII}:1SiO₂^{a}:0.27Na₂O:7H₂O | Polyquaternium-32, 0.4 | Rotational | 120 | 48 | 79.8 |
| 22 | 0.50Al₂O₃^{II}:1SiO₂^{c} :0.42Na₂O:100H₂O | Polyquaternium-44 0.4 | Rotational | 179 | 12 | 89.3 |
| | | Polyquaternium-32, 0.4 | | | | |
| | 0.042Al₂O₃^{III}:1SiO₂^{a}:0.11Na₂O:0.11 K₂O:40H₂O | Polyquaternium-7, 0.5 | | | | |
| 23 | | Polyquaternium-10, 0.3 | Static | 170 | 36 | 89.6 |
| | | Polyquaternium-44, 0.2 | | | | |
| 24 | 0.50Al₂O₃^{V} :1SiO₂^{c} :0.36Na₂O:55H₂O | Polyquaternium-6, 0.4 | Rotational | 175 | 48 | 93.2 |
| | | Polyquaternium-44, 0.4 | | | | |
| | | Polyquaternium-10, 0.2 | | | | |
| 25 | 0.12Al₂O₃^{IV} :1SiO₂^{f} :0.25Na₂O:30H₂O | Polyquaternium-22 0.3 | Rotational | 178 | 24 | 87.5 |
| | | Polyquaternium-37, 0.3 | | | | |
| 26 | 0.33Al₂O₃^{II}:1SiO₂^{c} :0.32Na₂O:90H₂O Polyquaternium-44, | Polyquaternium-22, 0.3 | Rotational | 145 | 96 | 83.4 |
| | | Polyquaternium-44, 0.8 | | | | |
| 27 | 0.005Al₂O₃^{I}:1SiO₂^{a} :0.1Na₂O:7H₂O | Polyquaternium-11, 0.1 | Rotational | 170 | 216 | 75.3 |
| 28 | 0.05Al₂O3^{II} :1SiO₂^{b} :0.2Na₂O:50H₂O | Polyquaternium-11, 0.2 | Static | 175 | 120 | 79.6 |
| 29 | 0.10Al₂O₃^{III}:1SiO₂^{d} :0.4Na₂O:80H₂O | Polyquaternium-11, 0.5 | Rotational | 180 | 96 | 78.9 |
| 30 | 0.20Al₂O₃^{VI}:1SiO₂^{e} :0.5K₂O:100H₂O | Polyquaternium-11, 0.8 | Rotational | 190 | 72 | 80.4 |
| 31 | 0.30Al₂O₃^{VII}:1SiO₂^{f}:0.11Na₂O:0.11 K₂O:40H₂O | Polyquaternium-11, 1.5 | Static | 200 | 48 | 89.6 |
| 32 | 0.40Al₂O₃^{IV}:1SiO₂ ^{c}:0.10Na₂O:0.10K₂O:20H₂O | Polyquaternium-11, 2.0 | Rotational | 210 | 24 | 90.7 |
| 33 | 0.50Al₂O₃^{v}:1SiO₂^{c} :0.3Na₂O:20H₂O | Polyquaternium-11, | Static | 220 | 12 | 87.8 |
| 34 | 0.005Al₂O₃¹:1SiO₂^{a} :0.1Na₂O:7H₂O | Polyquaternium-11, 0.1 | Rotational | 169 | 12 | 81.4 |
| 35 | 0.05Al₂O₃^{II}:1SiO₂^{b}:0.2Na₂O:50H₂O | Polyquatemium-11, 0.2 | Static | 160 | 24 | 75.3 |
| 36 | 0.10Al₂O₃^{III}:1SiO₂^{d} :0.4Na₂O:80H₂O | Polyquaternium-11, 0.5 | Rotational | 150 | 48 | 76.5 |
| 37 | 0.20Al₂O₃^{VI}:1SiO₂^{e} :0.5K₂O:100H₂O | Polyquaternium-11, 0.8 | Rotational | 140 | 72 | 73.4 |
| 38 | 0.30Al₂O₃^{VII}:1SiO₂^{f}: 0.11Na₂O: 0.11 K₂O: 40 H₂O | Polyquaternium-11 1.5 | Static | 135 | 96 | 70.2 |
| 39 | 0.40Al₂O₃^{IV}:1SiO₂ ^{c}:0.10Na₂O:0.10K₂O:20H₂O | Polyquaternium-11, 2.0 | Rotational | 130 | 120 | 69.8 |
| 40 | 0.50Al₂O₃^{v}:1SiO₂^{c} :0.3Na₂O:20H₂O | Polyquaternium-11, 3.0 | Static | 120 | 216 | 65.4 |

Silicon source: ^{a}silica sol; ^{b}fumed silica; ^{c}ethyl orthosilicate; ^{d}methyl orthosilicate; ^{e}silica gel; ^{f}water glass.

Aluminium source: ^{I}sodium aluminate; ^{II}aluminum chloride; ^{III}aluminium hydroxide; ^{IV}aluminium sulfate; ^{V}aluminium oxide; ^{VI}aluminium isopropoxide; ^{VII}aluminium nitrate.

### Example 2: XRD characterization of samples 1-40

Samples 1-40 prepared in Example 1 were subject to XRD characterization and were confirmed to be Beta zeolite molecular sieves. The instrument used was Philips X'Pert PROX model X-ray diffractometer with a copper target and a *K*α radiation source (λ=1.5418Å). The instrument had a working voltage of 40kv and a working current of 40mA. The resultant XRD spectrograms of samples 1-40 were consistent with the characteristic spectrogram of a standard Beta zeolite molecular sieve. A typical XRD spectrogram was represented by sample 1, with main diffraction peak positions and peak intensities at 2θ of 5°-50° being shown in Table 2. Comparing data results of other samples to sample 1, the positions and shapes of diffraction peaks were the same, and the relative peak intensities fluctuated in a range of ±5% according to the changes of the synthesis conditions, indicating that the synthesized products had the characteristics of a Beta structure.

**Table 2 XRD diffraction data of typical sample**

| No. | 2θ/° | **Relative intensity/%** |
|---|---|---|
| 1 | 7.4977 | 39.20 |
| 2 | 21.2905 | 24.85 |
| 3 | 22.3789 | 100.00 |
| 4 | 25.2165 | 5.77 |
| 5 | 27.0356 | 4.73 |
| 6 | 28.5078 | 4.58 |
| 7 | 29.5219 | 5.16 |
| 8 | 33.246 | 3.76 |
| 9 | 37.2956 | 1.52 |
| 10 | 43.3512 | 4.83 |

### Example 3: Chemical composition of samples 1-40 prepared in Example 1

Chemical composition measurement was performed on samples 1-40 prepared in Example 1 by an elemental analyzer. The analyzer used was Magix (PHILIPS) model X fluorescent analyzer. By an IQ⁺ standard-free quantitative analysis program, the fluorescence intensity of a standard sample was corresponded to the standard composition thereof, with the effect of spectral line interference subtracted.

The results measured by the elemental analyzer were percent contents of oxides of respective elements. The chemical composition and the ratio of silicon to aluminium of the samples, as shown in Table 3, may be obtained by back derivation of percent contents of oxides of elements.

**Table 3 Chemical composition of samples 1-40**

| Sample No. | Chemical composition (in moles, calculated with Al₂O₃ as 1) | | | Si/Al |
|---|---|---|---|---|
| | Na₂O+K₂O | Al₂O₃ | SiO₂ | |
| 1 | 0.080 | 1 | 14.8 | 7.4 |
| 2 | 0.110 | 1 | 16.4 | 8.2 |
| 3 | 0.150 | 1 | 40.0 | 20 |
| 4 | 1.500 | 1 | 150 | 75 |
| 5 | 0.050 | 1 | 3 | 1.5 |
| 6 | 0.167 | 1 | 45 | 22.5 |
| 7 | 0.080 | 1 | 2 | 1 |
| 8 | 0.170 | 1 | 60 | 30 |
| 9 | 0.148 | 1 | 23 | 11.5 |
| 10 | 0.152 | 1 | 30 | 15 |
| 11 | 0.80 | 1 | 140 | 70 |
| 12 | 1.57 | 1 | 90 | 45 |
| 13 | 0.090 | 1 | 12 | 6 |
| 14 | 0.178 | 1 | 75 | 37.5 |
| 15 | 0.132 | 1 | 23 | 11.5 |
| 16 | 0.030 | 1 | 4 | 2 |
| 17 | 0.120 | 1 | 18 | 9 |
| 18 | 0.89 | 1 | 90 | 45 |
| 19 | 0.135 | 1 | 23.4 | 11.7 |
| 20 | 0.094 | 1 | 49 | 24.5 |
| 21 | 0.188 | 1 | 26.28 | 13.14 |
| 22 | 0.150 | 1 | 23.8 | 11.9 |
| 23 | 0.123 | 1 | 20 | 10 |
| 24 | 0.060 | 1 | 2 | 1 |
| 25 | 0.142 | 1 | 7.5 | 3.75 |
| 26 | 0.879 | 1 | 74 | 37 |
| 27 | 1.20 | 1 | 199 | 99.5 |
| 28 | 0.154 | 1 | 18 | 9 |
| 29 | 0.01 | 1 | 9.5 | 4.75 |
| 30 | 0.254 | 1 | 45 | 22.5 |
| 31 | 0.640 | 1 | 30 | 15 |
| 32 | 0.154 | 1 | 24.5 | 12.25 |
| 33 | 0.06 | 1 | 2 | 1 |
| 34 | 0.89 | 1 | 200 | 100 |
| 35 | 0.345 | 1 | 18 | 9 |
| 36 | 0.879 | 1 | 195 | 97.5 |
| 37 | 0.456 | 1 | 49.3 | 24.65 |
| 38 | 0.98 | 1 | 150 | 75 |
| 39 | 0.120 | 1 | 8.5 | 4.25 |
| 40 | 0.118 | 1 | 2 | 1 |

### Example 4: Characterization of pore size distribution of micropores and mesopores of samples 1-40

Nitrogen gas physisorption characterization was performed on samples 1-40 prepared in Example 1. The instrument used was Micromeritics Tristar3000 model nitrogen gas physisorber. Before nitrogen gas physisorption characterization was performed, the resultant samples 1-40 were subjected to a pretreatment. The steps of the pretreatment were as follows: a molecular sieve sample was treated by evacuation at normal temperature, and treated at 130°C for 2 h after a vacuum condition was reached, and then treated at 350°C for 2 h. The result of nitrogen gas physisorption demonstrated that samples 1-40 had micropores with pore sizes of 0.6-0.7 nm, all containing mesoporous structures. The pore size distribution of mesopores, average pore size, and pore volume of mesopores were as shown in Table 4.

**Table 4 Pore size distribution of mesopores of samples 1-40**

| Sample No. | Levels of mesopores | Pore size range of mesopores (nm) | | Average pore size (nm) | Pore volume of mesopores cm³/g |
|---|---|---|---|---|---|
| **1** | One level of mesopores | 2-7 | | 3.7 | 0.65 |
| **2** | One level of mesopores | 3-10 | | 5.0 | 0.80 |
| **3** | One level of mesopores | 5-13 | | 7.0 | 0.95 |
| **4** | One level of mesopores | 3-6.5 | | 4.0 | 0.99 |
| **5** | One level of mesopores | 4-7 | | 4.5 | 0.78 |
| **6** | One level of mesopores | 4-10 | | 5.5 | 0.95 |
| **7** | One level of mesopores | 3-5 | | 3.8 | 0.80 |
| **8** | One level of mesopores | 3-6.5 | | 4.0 | 0.84 |
| **9** | One level of mesopores | 3.5-5.5 | | 3.7 | 0.86 |
| **10** | One level of mesopores | 2.5-6.5 | | 3.5 | 0.81 |
| **11** | Two levels of mesopores | Level I mesopores | 2-4.3 | 3.9 | 0.38 |
| | | Level II mesopores | 4-13 | 8.7 | 0.38 |
| **12** | Two levels of mesopores | Level I mesopores | 2.3-4.8 | 3.7 | 0.22 |
| | | Level II mesopores | 4-12 | 8.8 | 0.66 |
| **13** | Two levels of mesopores | Level I mesopores | 2.4-4.7 | 3.5 | 0.14 |
| | | Level II mesopores | 5-12 | 9.0 | 0.85 |
| **14** | Two levels of mesopores | Level I mesopores | 2.4-4.6 | 3.7 | 0.09 |
| | | Level II mesopores | 5-13 | 8.8 | 0.81 |
| **15** | Two levels of mesopores | Level I mesopores | 2.5-4.7 | 3.5 | 0.08 |
| | | Level II mesopores | 4.7-12.5 | 9.2 | 0.88 |
| **16** | Two levels of mesopores | Level I mesopores | 2.4-4.6 | 3.5 | 0.05 |
| | | Level II mesopores | 4.9-10 | 7.9 | 0.75 |
| **17** | Two levels of mesopores | Level I mesopores | 2.3-4.8 | 3.7 | 0.03 |
| | | Level II mesopores | 4.4-11.5 | 8.6 | 0.60 |
| **18** | Two levels of mesopores | Level I mesopores | 2.9-4.8 | 3.9 | 0.05 |
| | | Level II mesopores | 4.3-10 | 7.5 | 0.80 |
| **19** | Two levels of mesopores | Level I mesopores | 3-4.57 | 3.8 | 0.13 |
| | | Level II mesopores | 4.1-10.5 | 8.0 | 0.65 |
| **20** | Two levels of mesopores | Level I mesopores | 3.0-4.7 | 3.4 | 0.10 |
| | | Level II mesopores | 4.3-12 | 8.2 | 0.74 |
| **21** | Two levels of mesopores | Level I mesopores | 2.9-4.8 | 3.3 | 0.18 |
| | | Level II mesopores | 4.3-11 | 7.8 | 0.72 |
| **22** | Two levels of mesopores | Level I mesopores | 3.0-4.8 | 3.2 | 0.06 |
| | | Level II mesopores | 4.0-13 | 8.6 | 0.72 |
| **23** | Two levels of mesopores | Level I mesopores | 3.0-4.6 | 3.5 | 0.12 |
| | | Level II mesopores | 4.1-10 | 7.9 | 0.78 |
| **24** | Two levels of mesopores | Level I mesopores | 2.8-4.5 | 3.6 | 0.28 |
| | | Level II mesopores | 4.3-12 | 8.9 | 0.56 |
| **25** | Two levels of mesopores | Level I mesopores | 3-4.7 | 3.4 | 0.23 |
| | | Level II mesopores | 4.3-11 | 7.8 | 0.69 |
| **26** | Two levels of mesopores | Level I mesopores | 2.9-4.8 | 3.3 | 0.05 |
| | | Level II mesopores | 4.3-11 | 7.8 | 0.94 |
| **27** | One level of mesopores | 8.0-15.0 | | 10.3 | 0.68 |
| **28** | One level of mesopores | 8.2-17 | | 10.5 | 0.72 |
| **29** | One level of mesopores | 9-20 | | 11.0 | 0.78 |
| **30** | One level of mesopores | 9.2-19 | | 10.9 | 0.77 |
| **31** | One level of mesopores | 8.0-18 | | 10.5 | 0.81 |
| **32** | One level of mesopores | 8.3-18 | | 10.3 | 0.87 |
| **33** | One level of mesopores | 10-20 | | 12.0 | 0.95 |
| **34** | One level of mesopores | 8.0-14.0 | | 10.0 | 0.97 |
| **35** | One level of mesopores | 8.9-15.3 | | 11.0 | 0.84 |
| **36** | One level of mesopores | 8.7-17.2 | | 11.3 | 0.83 |
| **37** | One level of mesopores | 8.5-15.0 | | 11.1 | 0.86 |
| **38** | One level of mesopores | 9.0-18.2 | | 13.0 | 0.85 |
| **39** | One level of mesopores | 9.0-19.3 | | 12.5 | 0.94 |
| **40** | One level of mesopores | 9.3-20.0 | | 13.3 | 0.96 |

### Example 5: Characterization of macroporous structures of samples 1-40 prepared in Example 1

Characterization of macroporous structures was performed on samples 1-40 prepared in Example 1. The instrument used was Micromeritics AutoPore IV 9500 mercury porosimeter. Before characterization of macroporous structures was performed, the resultant samples 1-40 were subjected to a pretreatment. The steps of the pretreatment were as follows: a molecular sieve sample was treated by evacuation at normal temperature, and then treated at 130°C for 2 h after a vacuum condition was reached. Experimental results demonstrated that samples 1-33 did not have peaks in a macroporous range of 50-2000nm and samples 34-40 contained macropores with a pore size distribution of 50-200 nm, as shown in Table 5.

**Table 5 Pore size distribution of macropores of samples 34-40**

| Sample No. | Pore size range of macropores (nm) | Average pore size (nm) |
|---|---|---|
| **34** | 50-150 | 80 |
| **35** | 75-120 | 90 |
| **36** | 80-140 | 110 |
| **37** | 50-180 | 80 |
| **38** | 90-200 | 110 |
| **39** | 70-190 | 100 |
| **40** | 100-200 | 120 |

### Example 6: Scanning electron microscope characterization of samples

Scanning electron microscope characterization was performed on samples 1-40 prepared in Example 1. The instrument used was Hitachi SU8020 field emission scanning electron microscope with an accelerating voltage of 25 kV. The scanning electron microscope images showed that the morphologies of samples 1-40 all exhibited spherical aggregation of nanoparticles. A typical scanning electron microscope image was represented by sample 1, as shown in Fig. 1.

### Example 7:

For samples 1, 2, 4, 7, 11, 12, 14, 15, 17 and 19 in Example 1, 1.0 g of the molecular sieve raw powders which were not subjected to baking in a muffle furnace at 550°C for 8h, were respectively weighted and loaded into a polytetrafluoroethylene container, and 5ml of aqueous hydrofluoric acid solution (20%) were added thereto, followed by oscillating and shaking evenly and standing for 1h. After solids were sufficiently dissolved, the liquid was collected for ¹³C liquid nuclear magnetic characterization. ¹³C liquid nuclear magnetic resonance was performed on Bruker DRX-400 nuclear magnetic resonance spectrometer. The results showed that the following structural unit was contained:

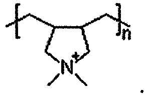

For samples 1, 2, 4, 7, 11, 12, 14, 15, 17 and 19 in Example 1, 1.0 g of molecular sieve raw powders which were not subjected to baking in a muffle furnace at 550°C for 8h, were respectively weighted, and physisorption tests were performed according to the method in Example 4. The pretreatment process was the same, except for evacuation at 160°C for 10h. The obtained results showed that pore volumes of mesopores were all 0 cm³g⁻¹ in the above molecular sieve raw powders which were not subjected to calcination; and compared to baked samples, the total pore volume of mesopores was reduced to 30-50% of the original one.

In combination with physisorption test results and nuclear magnetic test results of molecular sieve raw powders described above, and compared to the results of Example 4, it was demonstrated that 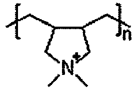 was present in channels of microporous and mesoporous channels in the molecular sieve before baking.

The above Examples are only several examples of the present invention and do not limit the invention in any way. Although preferred Examples are used to illustrate the invention as above, they are not intended to limit the invention. Without departing from the scope of the technical solution of the present invention, any person skilled in the art may make some variations and modifications based on the technique contents disclosed above, which are all regarded as equivalent Examples and are all within the scope of the technical solution of the invention.

## Claims

1. A Beta molecular sieve, **characterized in that** a substance containing the following structural unit is present in channels of the molecular sieve: 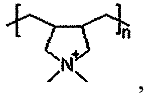 wherein n is a positive integer;
said Beta molecular sieve, after calcination to remove the substance containing the structural
unit 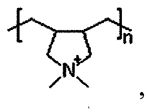 contains level I mesopores having a pore size of 2-4.8 nm and level II mesopores having a pore size of 4.9-13nm;
as preferable ranges of pore sizes, the pore size of said level I mesopores is 2-4nm and the pore size of said level II mesopores is 5-10nm;
as further preferable ranges of pore sizes, the pore size of said level I mesopores is 3-4nm and the pore size of said level II mesopores is 7-10nm.

2. The Beta molecular sieve according to claim 1, **characterized in that** the pore volume ratio of said level I mesopores to said level II mesopores is 1:1-20; as a preferable range, the pore volume ratio of said level I mesopores to said level II mesopores is 1:1-10; as a further preferable range, the pore volume ratio of said level I mesopores to said level II mesopores is 1:2-7.

3. The Beta molecular sieve according to claim 1, **characterized in that** the pore volume ratio of said level I mesopores to said level II mesopores is 1:11-20.

4. The Beta molecular sieve according to claim 1, **characterized in that** the total pore volume of said level I mesopores and said level II mesopores is not less than 0.5 cm³/g.

5. A preparation method for the Beta molecular sieve according to any one of claims 1-4, **characterized in that** an initial gel mixture produced from a silicon source, an aluminium source, polyquaternium P, water, and a base source is crystallized under a hydrothermal condition at 120-179°C to prepare a Beta molecular sieve; wherein said polyquaternium P, as a structure guiding agent, is selected from any one or more of polyquaternium-6, polyquaternium-7, polyquaternium-22, and polyquaternium-39.

6. The method according to claim 5, **characterized in that** said aluminium source is selected from an organic aluminium source and/or an inorganic aluminium source; said silicon source is selected from an organic silicon source and/or an inorganic silicon source; and said base source is selected from an organic base and/or an inorganic base.

7. The method according to claim 5, **characterized in that** the steps for synthesis are as follows:
a) mixing a silicon source, an aluminium source, sodium hydroxide and/or potassium hydroxide, polyquaternium P, and water to form an initial gel mixture having the following proportions:
the molar ratio of Al₂O₃:SiO₂ = 0.005-0.5
the molar ratio of Na₂O and/or K₂O:SiO₂ = 0.10-0.5
the molar ratio of H₂O:SiO₂ = 7-100
the mass ratio of P:SiO₂ = 0.1-3;
b) charging the initial gel mixture obtained in said step a) to a stainless reaction kettle, enclosing, and then heating to 120-179°C and crystallizing for 12 hours or more; and
c) after the crystallization is complete, separating and drying solid products to obtain the Beta molecular sieve.

8. The method according to claim 7, **characterized in that** the mass ratio of polyquaternium P to SiO₂ in said step a) is P:SiO₂ = 0.1-1.5; as a preferable range, the mass ratio of polyquaternium P to SiO₂ in said step a) is P:SiO₂ = 0.1-0.8.

9. The method according to claim 7, **characterized in that** the crystallization temperature is 130-179°C and the crystallization time is 12-216 hours in said step b).

10. The method according to claim 7, **characterized in that** the crystallization mode in said step b) may be static crystallization and may also be rotational crystallization.
